# EUROPÄISCHE PATENTSCHRIFT

(11) **EP 0 751 360 B1**
(45) Veröffentlichungstag und Bekanntmachung des Hinweises auf die Patenterteilung: **02.12.1998**
(21) Anmeldenummer: 96110622.6
(22) Anmeldetag: 01.07.1996
(51) Int. Cl.: F26B 21/02, F26B 15/16

(54) **Verfahren zum Trocknen von Lochziegeln od.dgl., und Tunneltrockner-Anlage zur Durchführung des Verfahrens**
Process for drying perforated bricks, and drying tunnel for carrying out the process
Procédé de séchage de briques creuses, et tunnel de séchage pour la mise en oeuvre de ce procédé

(30) Priorität: 30.06.1995 DE 19523439
(43) Veröffentlichungstag der Anmeldung: 02.01.1997
(60) Teilanmeldung: 98108115.1
(73) Patentinhaber: Keller GmbH, 49479 Ibbenbüren-Laggenbeck (DE)
(72) Erfinder: Averbeck, Laurenz, Dipl.-Ing., 49186 Bad Iburg (DE); Lindemann, Helmut, Dipl.-Ing., 49497 Mettingen (DE); Schrameyer, Michael, Dipl.-Ing., 49477 Ibbenbüren (DE)

(56) Entgegenhaltungen:
- EP-A- 0 042 372
- EP-A- 0 343 618
- EP-A- 0 674 146
- AT-A- 325 494
- DE-A- 2 320 600
- DE-C- 106 704
- DE-C- 371 869
- DE-C- 910 877
- FR-A- 972 931
- FR-A- 1 080 658
- FR-A- 2 127 571

## Beschreibung

Die Erfindung bezieht sich auf ein Verfahren zum Trocknen von Lochziegeln od. dgl., und auf eine Tunneltrockner-Anlage zur Durchführung des Verfahrens, wobei die entsprechend den Erfordernissen konditionierte heiße Trocknungsluft durch die Formlingskanäle (Löcher) vertikal bewegt wird.

Bei den bisher bekannten Verfahren und Tunneltrocknern zum Trocknen von Lochziegeln mit vertikaler Durchlüftung besteht noch der Nachteil einer verhältnismäßig geringen Leistung, ungleichmäßiger Durchströmung und/oder eines hohen Energieverbrauchs.

Der Erfindung liegt daher die Aufgabe zugrunde, ein Verfahren zum Ziegel-Trocknen, insbes. Lochziegel-Trocknen und eine entsprechende Tunneltrockner-Anlage zu schaffen, womit einerseits in energiesparender Arbeitsweise eine Leistungssteigerung erzielt wird und andererseits qualitätssteigernd schwindungsbedingte Rißbildung weitgehendst vermieden wird.

Erfindungsgemäß wird dies durch ein Verfahren gemäß Patentanspruch 1 sowie durch einen Tunneltrockner gemäß Patentanspruch 7 gelöst. Weiterbildungen ergeben sich aus den Unteransprüchen.

Bei dem erfindungsgemäßen Verfahren und der erfindugsgemäßen Tunneltrockner-Anlage insbes. zum Trocknen von Lochziegeln (die teilweise auch als "Gittersteine" bezeichnet werden), mit vertikaler Luftdurchströmung wird eine gezielte und intensive Durchströmung des Trocknungsgutes (d. h. des sogenannten Belags) erreicht. Dabei wird aufgrund doppellagiger Formlingsstapelung einerseits eine wesentlich größere - nämlich doppelte - Ziegelmenge als bei einlagiger Arbeitsweise getrocknet und andererseits der Vorteil kurzer Produktdurchströmung aufgrund noch kurzer Kanäle beibehalten und eine große Trocknungsleistung ohne trocknungsbedingte Rißbildung erzielt. Die kurzen Umwälzkreise, in bevorzugter Weise sich über das Maß von maximal 20 Lochziegel-Reihen erstreckend, mit gleichmäßiger Luftströmung auf gesamter Tunnelbreite bewirken bei geringem Energieverbrauch eine hohe Luftströmung, womit die Lochziegel gleichmäßig umströmt und durchströmt werden. Mit dem erfindungsgemäßen Verfahren und Tunneltrockner-System lassen sich kurze Reisezeiten von unter 10 Stunden, bei manchen Materialien sogar von etwa 5 Stunden realisieren. Da weniger Transportmittel, insbesondere Trocknerwagen, pro Produkt-Tonnage erforderlich sind als bei einlagiger Behandlung, ist eine Investitionseinsparung gegeben. Aufgrund erheblicher Energie- und Investitionseinsparung sowie Qualitätssteigerung ist die Erfindung von großem wirtschaftlichen Nutzen.

Auf der Zeichnung sind Ausführungsbeispiele der Erfindungsgedanken dargestellt. Es zeigen:
- Fig. 1: eine Längsschnitt-Darstellung eines Teilbereiches eines Tunneltrockners in der Art eines Düsentrockners mit vertikaler Durchströmung von zweilagig angeordnetenQuerreihen von Lochziegel-Formlingen, wobei die der Formlingsbeblasung mit Trocknungsluft dienende Ventilationseinrichtung das Querstromventilator(einrichtung) ausgeführt ist, die einerseits Luft durch die Lochziegel nach oben saugt und andererseits Luft nach unten bläst,
- Fig. 2: eine Längsschnitt-Darstellung eines Teilbereichs eines abgeänderten Tunneltrockners, bei dem wechselweise Düsenkästen zum aufwärtsgerichteten und abwärtsgerichteten Blasen vorgesehen sind,

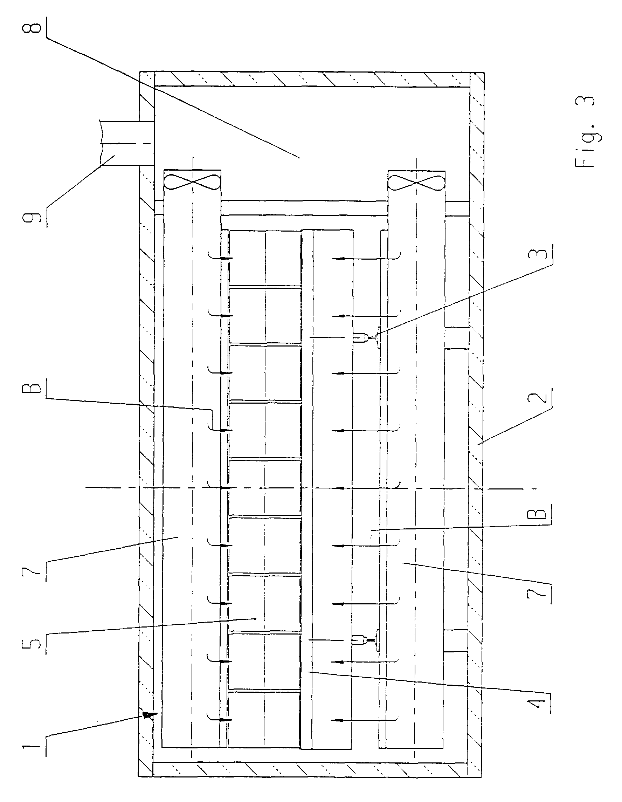

- Fig. 3: einen Querschnitt der Ausführung gemäß Fig. 2 im Bereich eines Düsenkastens, Fig. 4 einen Horizontalschnitt durch den Trockner gemäß Fig. 1 oberhalb einer mit Schlitzen versehenen Zwischendecke und
- Fig. 5: einen Horizontalschnitt durch eine gegenüber Fig. 4 abgeänderte Ausführung mit Rundlöchern in der Zwischendecke.

Die Erfindung betrifft einen insgesamt mit 1 bezifferten Tunneltrockner für die Lochziegel-Fertigung, wobei eine Formlingsanordnung auf den Schnittflächen erfolgt und dementsprechend die Löcher vertikal durchströmt und während des Transports durch den Tunneltrockner 1 getrocknet werden. Zwecks Steigerung der Produktion wird das insbesondere aus Lochziegel-Formlingena bekannter Abmessungen bestehende Trocknungsgut (der sogen. Belag) doppellagig gestapelt, bei kleinem Maß zwischen den beiden Schnittflächen kann auch eine dreilagige Formlingsanordnung erfolgen - bis zu einer Stapelhöhe von max. 800 mm. Dachziegel werden einlagig getrocknet, wobei diese Formlinge vertikal oder aus der Vertikalen geneigt durch den Tunneltrockner transportiert werden. Oberhalb der zu trocknenden Formlinge verbleibt in jedem Fall ein Spalt von geringer Höhe, max. 100 mm Höhe, bis zur Trocknungsluft-Ausblasstelle.

Im höhenmäßigen Abstand zu einem Tunnelboden 2 ist eine Laufbahn 3 für vertikal luftdurchströmbar sowie insbesondere als Bestandteil eines Trocknerwagens ausgebildete Transportunterlagen 4 vorgesehen. Solche Transportunterlagen 4 können von Wagen, Plateaus od. dgl. gebildet sein. Bei einer bevorzugten Wagen-Ausführung sind die Räder mit 4a beziffert.

Die Formlinge 5 werden durch hintereinanderliegende sowie in Tunnellängsrichtung umwälzende Umwälzkreise U des ansonsten im Gegenstrom zur Transportrichtung T durchlüfteten und zonenweise mit entsprechend den Erfodernissen konditionierter heißer Luft versorgten Trockentunnels bewegt. Die Pfeile in der Zeichnung bedeuten:
B = Beblasung- und Durchströmungsrichtung
L = Luft-Längsströmung durch den Trockentunnel
T = Transportrichtung des zu trocknenden Gutes

In jedem Umwälzkreis U werden die Formlinge 5 an einer einen gezielten vertikalen Luftstrom B durch das Trocknungsgut blasenden Ventilationseinrichtung 6, 7, 7' taktweise oder kontinuierlich vorbeigeführt.

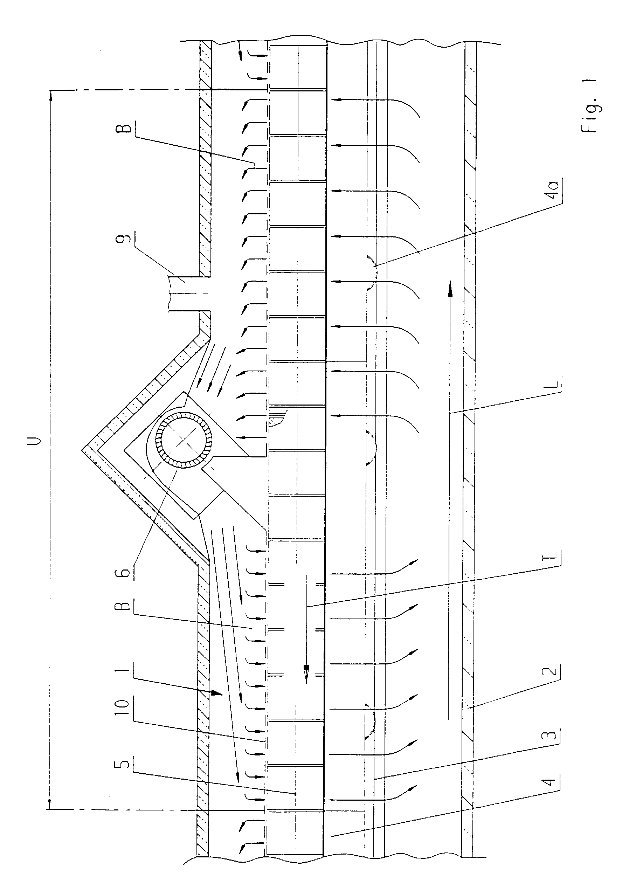

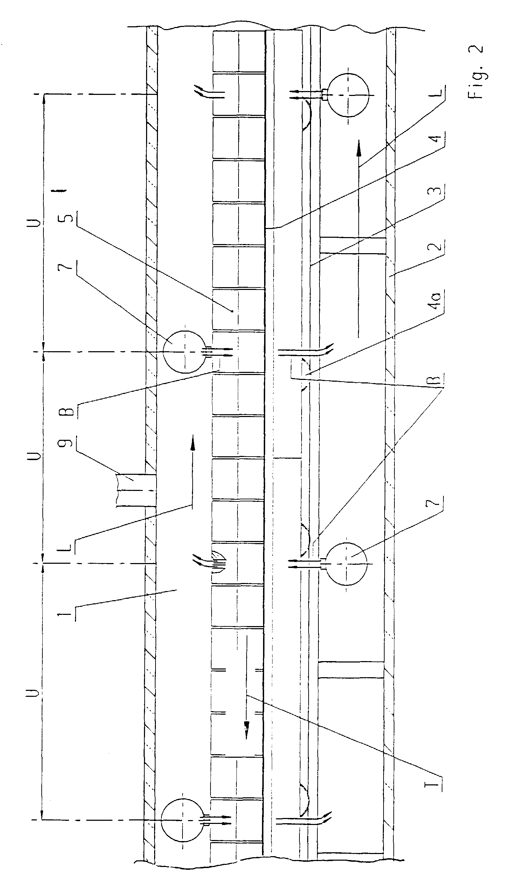

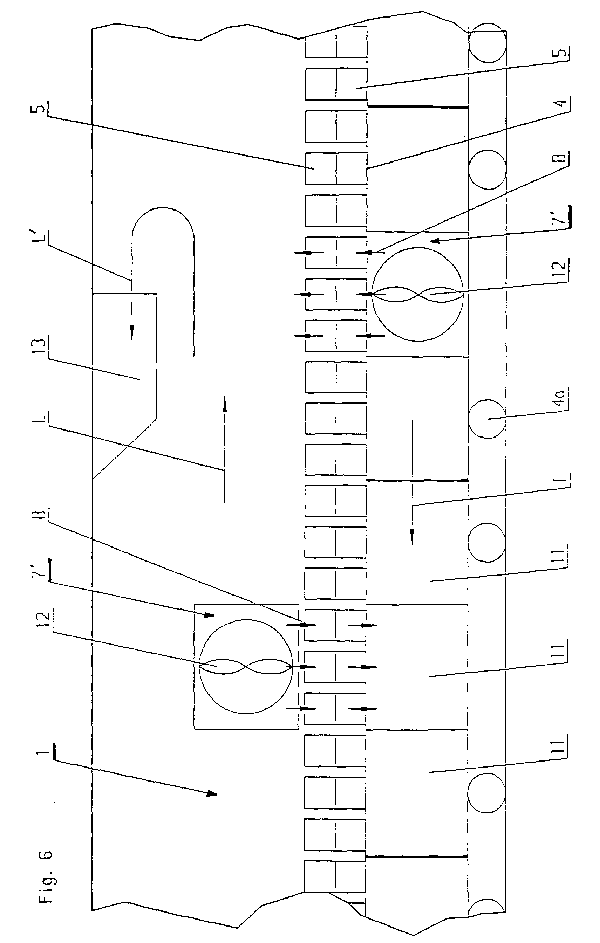

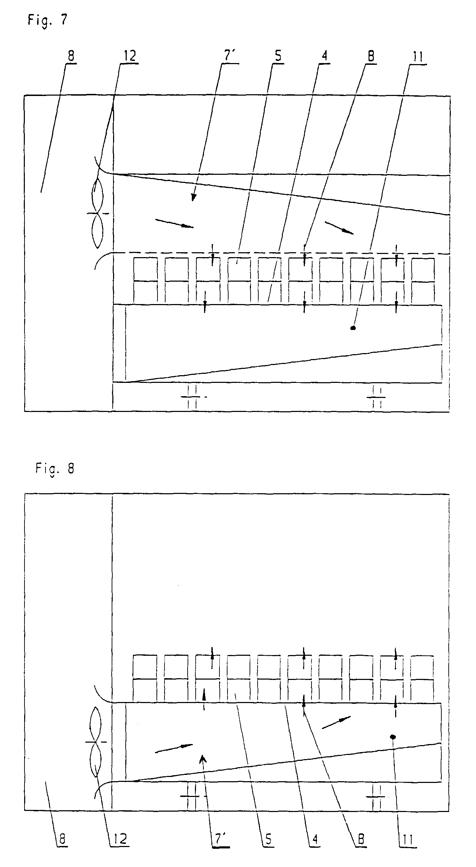

Die Formlinge 5 werden gemäß Fig. 1 mittels eines in einer Decken-Kammer angeordneten Querstromventilators 6 sowie gemäß Fig. 2 und 6 mittels wechselweise oberhalb und unterhalb der Formlingsbewegungsbahn angeordneter Düsenkästen 7, 7' angeblasen und dabei über vertikale Luftströmung gezielt sowie intensiv durchlüftet. Dabei wird jeder Formling 5 mittels erzwungener Konvektion gleichmäßig umströmt und durchströmt - die diesbezüglichen Luftwege sind die Formlingskanäle 5a sowie die querverlaufende Spalten a und die längsverlaufende Spalten b zwischen benachbarten Formlingen 5.

In bevorzugter Weise werden die einzelnen Formlinge 5 eines zu trocknenden Lochziegel-Belags mit ihren eine Gitterfläche darstellenden Schnittflächen auf einer Horizontalebene in solcher Weise angeordnet, daß die sich aus dem Lochanteil der Gitterfläche der Formlinge 5 und den Spalten a, b zwischen benachbarten Formlingen 5 ergebenden durchströmbaren Flächen so aufeinander abgestimmt sind, daß eine gleichmäßige Durchströmung sowie Umströmung der Formlinge 5 erfolgt und daß dabei sich eine der Massenverteilung innerhalb des Formlingsquerschnitts entsprechende Luftströmung durch die Belagsgrundfläche ergibt. Bei einer solchen Anordnung der Formlinge 5 wirkt der Belag selbst als Strömungsgitter.

Bei der Ausführung gemäß Fig. 1 ist der Umwälzkreis mit U bezeichnet. Seine Länge kann 2 - 8 m, vorzugsweise etwa 6 m betragen. Die sich jeweils auf einer Belag-Seite erstreckenden Umlenkzonen gemäß Fig. 2 sind mit U' bezeichnet und etwa halb so lang wie U.

Bei den Ausführungsformen mit Düsenkästen 7 sind dieselben abwechselnd nach oben und nach unten blasend angeordnet. Sie besitzen einen die Luft im wesentlichen vertikal ausblasenden Luftauslaß und werden von einem Düsenkasten-Stirnende aus mit entsprechend den Erfordernissen konditionierter Trocknungsluft versorgt, in bevorzugter Weise sind sie an einer gemeinsamen seitlichen Luftkammer, insbesondere Mischkammer 8, angeschlossen.

Bei der Ausführungsform mit Querstromventilator 6 ist der Trockentunnel oberhalb der Bewegungsbahn des zu trocknenden Belags mit einer Zwischendecke 10 versehen, und der sich oberhalb dieser Zwischendecke 10 erstreckende Raum über quer zur Transportrichtung T verlaufende Trennwände, kammerbildend unterteilt. Jede dieser Kammern nimmt einen Querstromventilator 6 auf. Anstelle der besonders bevorzugten und zeichnerisch fixierten Lösung mit vertikal und quer zur Transportrichtung T verlaufenden Trennwänden kann selbstverständlich auch eine abgeänderte Ausführung Anwendung finden, bei welcher jedem Querstromventilator 6 eine einerseits den Ansaugbereich und andererseits den Ausblasbereich übergreifende Haube zugeordnet ist. In allen Ausführungsformen mit Querstromventilator 6 wird die Länge eines Umwälzkreises U von der Querabschottung des sich über dem zu trocknenden (Belag)/Besatz erstreckenden Kanalteil des Tunneltrockners 1 bestimmt.

Die Zwischendecke 10 im Bereich der Umwälzkreise U erstreckt sich mit möglichst geringem Abstand - vorzugsweise etwa 10-100 mm, insbesondere etwa 50 mm - oberhalb der Belagoberseite. In bevorzugter Weise besteht sie aus Metall, wobei die der Beströmung dienenden Öffnungen lochartig oder schlitzartig ausgebildet sein können. Durch die Loch- oder Schlitz-Anordnung in der Zwischendecke 10 wird die Durchströmfläche im Vergleich zur Belagsfläche erheblich reduziert, vorzugsweise beträgt diese Durchströmfläche bis etwa 50 %.

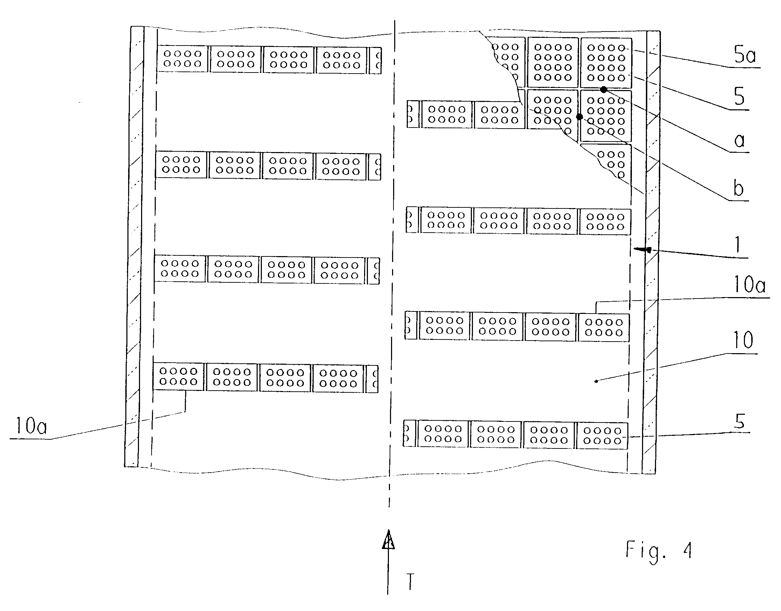

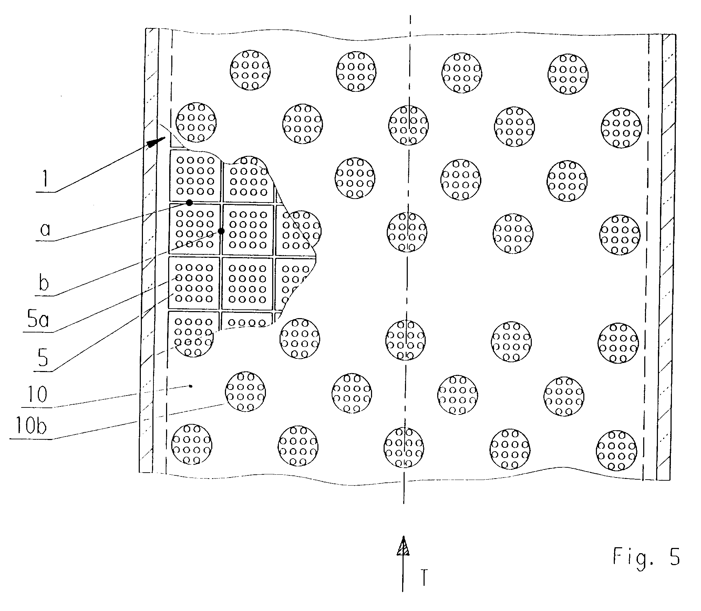

In bevorzugter Weise sind die mit 10a, 10b bezifferten Durchblasöffnungen gegeneinander versetzt. Die Ausführungen gemäß Fig. 4 und 5 sollen lediglich das Grundprinzip, jedoch nicht eine zwingend vorgeschriebene Gestaltungsform offenbaren.

In bevorzugter Weise verlaufen die Durchblasöffnungen 10a, 10b in quer zur Formlings-Transportrichtung T verlaufenden Reihen und dabei in einer gegeneinander versetzten Anordnung. Gemäß Fig. 4 sind die Durchblasöffnungen 10a von quer zur Transportrichtung T ausgerichteten Schlitzen gebildet. Dabei können diese Schlitze 10a in der Zwischendecke sich jeweils etwa über die halbe Tunnelbreite (Kanalbreite) erstrecken und abwechselnd auf der linken oder rechten Seite vorgesehen sein.

Bei der Ausführung gemäß Fig. 5 sind die Durchblasöffnungen 10b von in Querreihen-Anordnung vorgesehenen Löchern gebildet, wobei die Löcher der einen Reihe jeweils auf Lücke zu denjenigen der anderen Reihe angeordnet sind. Die Lochform kann rund, oval oder polygonal ausgebildet sein.

Bei allen vorerwähnten Ausführungsformen wird zwischen den entgegengesetzten vertikalen Luftbewegungen B jeweils mindestens eine Formlings-Querreihe in einer Ruheposition beblasungsfrei und/oder sogfrei gehalten. Dies wird bei der Düsenkasten-Version dadurch erreicht, daß ein sich in Tunnellängsrichtung erstreckender Abstand zwischen dem oberen und den unteren Düsenkasten 7 einer jeden Umwälzzone U' eingehalten wird und bei der Querstromventilator-Version weist die Zwischendecke 10 zwischen dem Ansaugbereich und Ausblasbereich einen loch- und/oder schlitzfreien Bereich auf, wie dies beispielhaft in Fig. 5 für den Bereich einer Formlings-Querreihe dargestellt ist.

Zumindest einige der Umwälzkreise U bzw. Umwälzzonen U' sind mit einer eigenen Trocknungsluft-Zuführung 9 für heiße Luft/Gase versehen.

Die Düsenkästen 7 können als Breitschlitzdüsen ausgebildet sein, wobei sich in Transportrichtung nur eine kurze Ausblaslänge, ergibt oder aber (was nicht dargestellt ist) in Transportrichtung eine Länge von einem oder mehreren zu beblasenden Ziegelformlingen (Lochziegelformlingen) aufweisen, wobei eine größere Fläche gleichmäßig beblasen wird. Besonders vorteilhaft ist eine Ausbildung, bei der zwei oder mehr Lochziegel-Querreihen beblasen werden.

Das Düsenkasten-Innere ist stets derart gestaltet, daß sich auf gesamter Transportbreite eine gleichmäßige Luftausströmung ergibt - insbesondere verjüngt sich der Blaskanal querschnittsmäßig vom Ventilaltorende aus zum ventilatorlosen Ende hin.

## Patentansprüche

1. Verfahren zum Trocknen von Lochziegeln od.dgl., bei dem Trocknungsluft das Trocknungsgut vertikal durchströmt, mit den Merkmalen:
a) die Lochziegel-Formlinge (5) werden auf luftdurchströmbaren Transportunterlagen (4) von Trocknerwagen in zwei- oder dreilagigen Querreihen sowie jeweils mit vertikaler Lochachsen-Erstreckung und in fluchtender Anordnung aufgesetzt und mittels der Transportunterlagen (4) durch hintereinanderliegende sowie in Tunnellängsrichtung umwälzende Umwälzkreise (U) bzw. Umwälzzonen (U') von kurzer Länge, insbes. 2 - 8 m Länge, eines im Gegenstrom zur Transportrichtung (T) durchlüfteten und abschnittsweise mit entsprechend den Erfordernissen konditionierter Trocknungsluft versorgten Trockentunnels (1) bewegt,
b) in jedem Umwälzkreis (U), von denen zumindest einige eine eigene Trocknungsluft-Zuführung (9) besitzen, werden die Formlinge (5) an einer einen auf gesamter Transportbreite gleichmäßigen, gezielten vertikalen Luftstrom (B) durch das Trocknungsgut - d.h. durch den sogen. Belag - und dessen Formlingskanäle (5a) blasenden Ventilationseinrichtung (6, 7) vorbeibewegt, welche eine abwärtsgerichtete und eine aufwärtsgerichtete beschleunigte Luftströmung bewirkt, und
c) zwischen den entgegengesetzten vertikalen Luftströmen (B) eines jeden Umwälzkreises (U) wird mindestens eine Formlings-Querreihe in Ruheposition, nämlich nahezu blas- oder sogfrei, gehalten.

2. Verfahren nach Anspruch 1, dadurch gekennzeichnet, daß der zu trocknende Belag unter quer zur Transportrichtung (T) verlaufenden Querstromventilatoren (6) transportiert wird, welche innerhalb eines jeden Umwälzkreises (U) an einem Ende eine vertikale Luftansaugung und am anderen Ende eine vertikale Luftausblasung bewirken.

3. Verfahren nach Anspruche 1 oder 2, dadurch gekennzeichnet, daß der zu trocknende Belag über eine gelochte Zwischendecke (10) durchlüftet und dabei auf der Trockentunnel-Breite stets nur stellenweise einem erzwungenen Konvektionsstrom ausgesetzt wird und die einzelnen von beschleunigter Luft durchströmten Stellen innerhalb der Belagsgrundfläche versetzt sind.

4. Verfahren nach Anspruch 1, dadurch gekennzeichnet, daß die den zu trocknenden Belag bildenden Formlingsstapel zwischen abwechselnd oberhalb und unterhalb der Bewegungsbahn angeordneten Düsenkästen (7) transportiert werden und dabei die Luft abwechselnd nach oben und nach unten geblasen wird.

5. Verfahren nach Anspruch 4, dadurch gekennzeichnet, daß die abwechselnde Querreihen-Beblasung von unten und oben mittels Düsenkästen (7) durchgeführt wird, die belagsseitig einen vertikalen Luftauslaß aufweisen und von einem Düsenkasten-Stirnende aus mittels eines Ventilators (12) mit entsprechend den Erfordernissen konditionierter Trocknungsluft (Heißluft) versorgt werden.

6. Verfahren nach Anspruch 1, dadurch gekennzeichnet, daß der zu trocknende Belag von Lochziegel-Formlingen (5) gebildet wird, die mit ihren eine Gitterfläche darstellenden Schnittflächen auf einer Horizontalebene liegen und daß die sich aus dem Lochanteil der Gitterfläche der Formlinge (5) und den Spalten (a, b) zwischen benachbarten Formlingen (5) ergebenden durchströmbaren Flächen so aufeinander abgestimmt sind, daß eine gleichmäßige Durchströmung sowie Umströmung der Formlinge (5) erfolgt und daß dabei sich eine der Massenverteilung innerhalb des Formlingsquerschnitts entsprechende Luftströmung durch die Belagsgrundfläche ergibt.

7. Tunneltrockner zum Trocknen von Lochziegel-Formlingen od. dgl., wobei die Löcher vertikal von Trocknungsluft durchströmt werden, sowie zur Durchführung des Verfahrens nach einem der Ansprüche 1 bis 7, dadurch gekennzeichnet, daß in einem im Gegenstrom zur Transportrichtung (T) belüfteten Trockentunnel (1) im Höhenabstand zum Tunnelboden (2) Laufbahnen (3) angeordnet sind, auf welchen luftdurchströmbare Transportunterlagen (4) von Trocknerwagen befördert werden, welche zur Aufnahme von zwei- oder dreilagigen Formlings-Querreihen - die mit verhältnismäßig geringem Höhenabstand - insbesondere von 10 - 100 mm - zu Blasöffnungen von vertikale Trocknungsluftströme erzeugenden Ventilationseinrichtungen (6, 7) befördert werden - vorgesehen sind, und daß jede Ventilationseinrichtung (6, 7), als Bestandteil eines von mehreren hintereinanderliegenden und jeweils in Tunnellängsrichtung umwälzenden kurzen Umwälzkreises (U) bzw. Umwälzzonen (U'), jeweils mindestens eine Formlings-Querreihe mit aufsteigendem und mindestens eine Formlings-Querreihe mit bodenwärts gerichtetem vertikalem Luftstrom (B) versorgt, wobei zwischen dem gezielt ausströmenden aufwärtsgerichteten und abwärtsgerichteten Luftstrom (B) eine Zone, insbesondere mindestens eine Formlings-Querreihe, ohne Vertikalbelüftung durch erzwungene Konvektion verbleibt.

8. Tunneltrockner nach Anspruch 7, dadurch gekennzeichnet, daß die Ventilationseinrichtung von einem Querstromgebläse (6) gebildet ist.

9. Tunneltrockner nach Anspruch 7 oder 8, dadurch gekennzeichnet, daß das Querstromgebläse (6) oberhalb einer nahe an die Belagoberseite heranreichenden gelochten metallenen Zwischendecke (10) angeordnet ist.

10. Tunneltrockner nach Anspruch 9, dadurch gekennzeichnet, daß die Zwischendecke (10) mit Durchblasöffnungen (10a, 10b) versehen ist, die in quer zur Formlings-Transportrichtung (T) verlaufende Reihen - und dabei gegeneinander versetzt - angeordnet sind.

11. Tunneltrockner nach Anspruch 10, dadurch gekennzeichnet, daß die Durchblasöffnungen (10a) von quer zur Transportrichtung (T) ausgerichteten Schlitzen gebildet sind.

12. Tunneltrockner nach Anspruch 11, dadurch gekennzeichnet, daß die Schlitze (10a) in der Zwischendecke (10) sich jeweils etwa über die halbe Tunnelbreite erstrecken und abwechselnd auf der linken oder rechten Hälfte vorgesehen sind.

13. Tunneltrockner nach Anspruch 10, dadurch gekennzeichnet, daß die Durchblasöffnungen (10b) von in Querreihen-Anordnung vorgesehenen Löchern gebildet sind, wobei die Löcher der einen Reihe jeweils auf Lücke zu denjenigen der anderen Reihe angeordnet sind.

14. Tunneltrockner nach Anspruch 7, dadurch gekennzeichnet, daß die Ventilationseinrichtung von gegeneinander versetzt oberhalb und unterhalb der Formlingsbewegungsbahn angeordneten Düsenkästen (7) gebildet ist.

## Claims

1. Method for drying perforated bricks or similar, in which drying air flows vertically through the material to be dried, comprising the features:
a) the perforated green bricks (5) are placed on transport carriers (4), through which air can flow, of drying cars in two- or three-layer transverse rows, in each case with the hole axes extending vertically and in an aligned arrangement and are moved by means of the transport carriers (4) through circulation circuits (U) or circulation zones (U') of a drying tunnel (1) which is aerated in counter-flow to the transport direction (T) and supplied in sections with drying air conditioned according to requirements, the circuits or zones being of a short length, in particular 2 - 8 m long, lying one behind the other and circulating in the longitudinal direction of the tunnel,
b) in each circulation circuit (U), at least some of which have their own drying air supply (9), the green bricks (5) are moved past a ventilation device (6, 7) which blows a specific vertical air stream (B), which is uniform over the entire transport width, through the material to be dried - i.e. through the so-called outer layer - and the green brick channels (5a) thereof, and which produces a downward directed and an upward directed accelerated air stream, and
c) at least one transverse row of green bricks is held in a rest position, i.e. virtually blast- or suction-free, between the opposed vertical air streams (B) of each circulation circuit (U).

2. Method according to claim 1, characterised in that the outer layer to be dried is transported below cross-flow fans (6) which extend transversely to the transport direction (T) and which cause air to be taken in vertically at one end and blown out vertically at the other end within each circulation circuit (U) .

3. Method according to claim 1 or 2, characterised in that the outer layer to be dried is aerated via a perforated intermediate ceiling (10), always only being exposed to a forced convection current in places over the drying tunnel width, and the individual places through which accelerated air flows being staggered within the basic area of the outer layer.

4. Method according to claim 1, characterised in that the green brick stacks forming the outer layer to be dried are transported between nozzle boxes (7) disposed alternately above and below the path of movement and the air is at the same time blown alternately upwards and downwards.

5. Method according to claim 4, characterised in that the transverse rows are blasted alternately from below and above by means of nozzle boxes (7) which have a vertical air outlet on the outer layer side and are supplied with drying air (hot air) conditioned according to requirements from a nozzle box front end by means of a fan (12).

6. Method according to claim 1, characterised in that the outer layer to be dried is formed by perforated green bricks (5) which lie with their cut faces, which represent a lattice face, in a horizontal plane, and that the penetrable faces resulting from the perforated portion of the lattice face of the green bricks (5) and the gaps (a, b) between adjacent green bricks (5) are adapted to one another such that air flows uniformly through and around the green bricks (5), and that the resulting air stream through the basic area of the outer layer corresponds to the distribution of mass within the green brick cross section.

7. Tunnel drier for drying perforated green bricks or similar, wherein drying air flows vertically through the holes, and for carrying out the method according to one of claims 1 to 7, characterised in that tracks (3) are disposed in a drying tunnel (1), which is aerated in counter-flow to the transport direction (T), at a vertical distance from the tunnel bottom (2), on which tracks transport carriers (4), through which air can flow, of drying cars are conveyed, these being provided to hold two- or three-layer transverse rows of green bricks which are conveyed at a relatively small vertical distance - in particular 10 - 100 mm - from blast openings of ventilation devices (6, 7) producing vertical drying air streams, and that each ventilation device (6, 7), as a component of one of a plurality of short circulation circuits (U) or circulation zones (U') lying one behind the other and circulating in the longitudinal direction of the tunnel, supplies at least one transverse row of green bricks with an upward air stream (B) and at least one transverse row of green bricks with a vertical air stream (B) directed towards the bottom, wherein a zone, in particular at least one transverse row of green bricks, is not vertically aerated by means of forced convection between the upward directed and the downward directed air stream (B), which flows out in a specific manner.

8. Tunnel drier according to claim 7, characterised in that the ventilation device is formed by a cross-flow fan (6).

9. Tunnel drier according to claim 7 or 8, characterised in that the cross-flow fan (6) is disposed above a perforated metal intermediate ceiling (10) almost touching the top side of the outer layer.

10. Tunnel drier according to claim 9, characterised in that the intermediate ceiling (10) is provided with blow-through openings (10a, 10b) which are disposed in rows extending transversely to the transport direction (T) of the green bricks - at the same time being staggered.

11. Tunnel drier according to claim 10, characterised in that the blow-through openings (10a) are formed by slits directed transversely to the transport direction (T).

12. Tunnel drier according to claim 11, characterised in that the slits (10a) in the intermediate ceiling (10) each extend approximately over half the width of the tunnel and are provided alternately in the left-hand or right-hand half.

13. Tunnel drier according to claim 10, characterised in that the blow-through openings (10b) are formed by holes provided in a transverse row arrangement, the holes of one row in each case being staggered in relation to those of the other row.

14. Tunnel drier according to claim 7, characterised in that the ventilation device is formed by nozzle boxes (7) disposed in a staggered manner above and below the path of movement of the green bricks.

## Revendications

1. Procédé de séchage de briques perforées ou similaires, dans lequel l'air de séchage s'écoule verticalement à travers le produit à sécher, avec les caractéristiques :
a) les briques crues de briques perforées (5) sont posées sur des supports de transport (4), pouvant être traversés par de l'air, de chariots de séchoir, en rangées transversales à deux ou trois couches, ainsi que respectivement avec une disposition verticale des axes des trous et en disposition alignée et sont déplacées, au moyen des supports de transport (4), à travers des domaines de renversement (U) ou respectivement des zones de renversement (U') de faible longueurs, en particulier de 2 à 8 m de long, disposés les uns derrière les autres et se renversant en direction longitudinale de tunnel, d'un tunnel de séchage (1) aéré en contre-courant par rapport à la direction de transport (T) et alimenté par sections en air de séchage conditionné en correspondance des conditions préalables,
b) dans chacun des domaines de renversement (U), parmi lesquels au moins quelques uns possèdent une amenée d'air de séchage (9) séparée, les briques crues (5) sont déplacées vers l'avant sur une installation de ventilation (6, 7) soufflant un courant d'air (B), uniforme sur la totalité de la largeur de transport, vertical approprié, à travers le produit à sécher c'est-à-dire à travers ce qu'on appelle les canaux de revêtement et ses canaux de brique crue (5a), installation qui produit des écoulements d'air accélérés dirigés vers le bas et dirigés vers le haut, et
c) au moins une rangée transversale de briques crues est maintenue en position de repos, à savoir pratiquement sans soufflage ou sans aspiration, entre les courants d'air (B) verticaux opposés de chacun des domaines de renversement.

2. Procédé selon la revendication 1,
caractérisé en ce que le revêtement à sécher est transporté sous des ventilateurs à flux transversal (6) s'étendant transversalement à la direction de transport (T), qui produisent à l'intérieur de chacun des domaines de renversement (U) à une extrémité une aspiration verticale d'air et à l'autre extrémité un soufflage vertical d'air.

3. Procédé selon la revendication 1 ou 2,
caractérisé en ce que le revêtement à sécher est aéré sur une couverture intermédiaire (10) perforée et soumis en outre, sur la largeur du tunnel de séchage, continuellement seulement par endroits, à un courant de convextion forcé et les endroits individuels traversés par de l'air forcé sont décalés à l'intérieur de la surface de base du revêtement.

4. Procédé selon la revendication 1,
caractérisé en ce que les empilements de briques crues formant le revêtement à sécher sont transportés entre des boîtes à buses (7) disposées alternativement au-dessus et au-dessous de la voie de transport et en outre l'air est soufflé alternativement vers le haut et vers le bas.

5. Procédé selon la revendication 4,
caractérisé en ce que le soufflage alternatif des rangées transversales depuis le bas et depuis le haut est effectué au moyen de boîtes à buses (7) qui présentent, du côté du revêtement, une sortie d'air verticale et sont alimentées en air de séchage (air chaud) conditionné en correspondance des exigences préalables par une extrémité de boîte à buses au moyen d'un ventilateur (12).

6. Procédé selon la revendication 1,
caractérisé en ce que le revêtement à sécher est formé de briques crues de briques perforées (5) qui reposent, par leurs surfaces de coupe présentant une surface de grille, sur un plan horizontal et que les surfaces pouvant être traversées, formées par la partie perforée de la surface de grille des briques crues (5) et les colonnes (a, b) entre les briques creuses (5) adjacentes sont accordées les unes aux autres de telle sorte qu'il se produise une traversée aussi bien qu'un écoulement extérieur autour de la brique crue qui sont uniformes et que, en outre, il se produit à travers la surface de base du revêtement un écoulement d'air correspondant à la répartition de masse à l'intérieur de la section transversale de la brique crue.

7. Séchoir-tunnel pour le séchage de briques crues de briques perforées ou similaires, les trous étant traversés verticalement par de l'air de séchage, ainsi que pour la mise en oeuvre du procédé selon l'une des revendications 1 à 7,
caractérisé en ce que des voies de roulement (3) sont disposées dans un tunnel de séchage (1) aéré à contre-courant de la direction de transport (T), à écartement en hauteur par rapport au fond (2) du tunnel, sur lesquelles sont transportés des supports de transport (4), pouvant être traversés par de l'air, de chariots de séchoir, qui sont prévus pour la réception de rangées transversales de briques crues à deux ou trois couches, qui sont transportées - à une distance en hauteur relativement faible - en particulier de 10 à 100 mm - par rapport à des ouvertures de soufflage, par des installations de ventilation (6, 7) engendrant des courants d'air de chauffage verticaux - et que chaque installation de ventilation (6, 7), en tant que composant de plusieurs domaines de renversement (U) ou respectivement de zones de renversement (U') courts, disposés les uns derrière les autres et se renversant respectivement en direction longitudinale du tunnel, alimente respectivement au moins une rangée transversale de briques crues par un courant d'air (B) montant et au moins une rangée transversale de briques crues par un courant d'air (B) vertical dirigé vers le fond, une zone, en particulier au moins une rangée transversale de briques crues, restant sans aération par convextion forcée entre les courants d'air (B) sortants appropriés dirigés vers le haut et dirigés vers le bas.

8. Séchoir-tunnel selon la revendication 7,
caractérisé en ce que l'installation de ventilation est formée par une soufflante à flux transversal (6).

9. Séchoir-tunnel selon la revendication 7 ou 8,
caractérisé en ce que la soufflante à flux transversal (6) est disposée au-dessus d'une couverture intermédiaire (10) métallique perforée arrivant près de la face supérieure du revêtement.

10. Séchoir-tunnel selon la revendication 9,
caractérisé en ce que la couverture intermédiaire (10) est munie d'ouvertures de soufflage (10a, 10b) qui sont disposées en rangées s'étendant transversalement à la direction de transport (T) des briques crues - et en outre décalées les unes par rapport aux autres.

11. Séchoir-tunnel selon la revendication 10,
caractérisé en ce que les ouvertures de soufflage (10a) sont formées par des fentes orientées transversalement à la direction de transport (T).

12. Séchoir-tunnel selon la revendication 11,
caractérisé en ce que les fentes (10a) s'étendent dans la couverture intermédiaire (10) respectivement sensiblement sur la moitié de la largeur du tunnel et sont disposées alternativement dans la moitié de gauche et la moitié de droite.

13. Séchoir-tunnel selon la revendication 10,
caractérisé en ce que les ouvertures de soufflage (10b) sont formées par des trous disposées selon un ordonnancement en rangées verticales, les trous d'une des rangées étant disposés respectivement en quinconce de ceux de l'autre rangée.

14. Séchoir-tunnel selon la revendication 7,
caractérisé en ce que l'installation de ventilation est formée par des boîtes à buses (7) disposées décalées les unes par rapport aux autres au-dessus et au-dessous de la voie de transport des briques crues.
